# EUROPEAN PATENT APPLICATION

(11) **EP 4 297 114 A1**
(43) Date of publication of application: **27.12.2023**
(21) Application number: 22831806.9
(22) Date of filing: 22.06.2022
(51) Int. Cl.: H01M 4/04, H01M 4/13

(54) **METHOD FOR PREPARING POSITIVE ELECTRODE PLATE, AND POSITIVE ELECTRODE PLATE AND BATTERY HAVING SAME**

(30) Priority: 29.06.2021 CN 202110727297
(71) Applicant: BYD Company Limited, Shenzhen, Guangdong 518118 (CN)
(72) Inventor: JIANG, Xinjun, Shenzhen, Guangdong 518118 (CN); ZHANG, Baosheng, Shenzhen, Guangdong 518118 (CN)
(74) Representative: Arnold & Siedsma
(86) International application number: PCT/CN2022/100483
(87) International publication number: WO 2023/273990

(57) **Abstract**

A method for preparing a positive electrode plate, a positive electrode plate, and a battery including same. The method for preparing a positive electrode plate includes: providing a current collector, the current collector including a coating region and a non-coating region; coating a positive-electrode active material on the coating region of the current collector; cutting the non-coating region at intervals along a length direction of the non-coating region to form a tab between every two adjacent cutting positions, an edge of a region of the positive-electrode active material corresponding to the cutting position being cut off at each cutting; and coating an electrically insulating adhesive on an edge of the positive-electrode active material between every two adjacent cutting positions.

## Description

### CROSS-REFERENCE TO RELATED APPLICATION

This application claims priority to and benefits of Chinese Patent Application No. 202110727297.1, filed on June 29, 2021. The entire content of the above-referenced applications is incorporated herein by reference.

### FIELD

The present disclosure relates to the technical field of batteries, and particularly to a method for preparing a positive electrode plate, a positive electrode plate, and a battery including same.

### BACKGROUND

A positive electrode plate is usually formed by coating a positive-electrode active material on a current collector. The state of the positive-electrode active material can be changed between liquid and solid. When the positive-electrode active material in liquid form is coated on the current collector, a leveling phenomenon occurs at the edge of the positive-electrode active material in liquid form. Therefore, after the positive-electrode active material is solidified from liquid to solid, the thickness of the edge of the positive-electrode active material is always less than the thickness of the other portions of the positive-electrode active material.

When a positive electrode plate and a negative electrode plate are wound or laminated to form a core of a battery, the small thickness of the edge of the positive electrode plate leads to a large gap between the edge of the positive electrode plate and the negative electrode plate when the other portions of the positive electrode plate are attached to the negative electrode plate. In the charging and discharging process of the battery, the ion movement path between the edge of the positive electrode plate and the negative electrode plate is larger than the ion movement path between the other portions of the positive electrode plate and the negative electrode plate. Consequently, the impedance between the edge of the positive electrode plate and the negative electrode plate is large, and ions cannot be easily intercalated into the negative electrode. Conductive ions in the positive-electrode active material are likely to precipitate out as crystals after multiple cycles of the battery.

In addition, due to the large gap between the edge of the positive electrode plate and the negative electrode plate, it is necessary to provide more electrolyte solution between the edge of the positive electrode plate and the negative electrode plate to ensure the normal deintercalation of ions at the edge of the positive electrode plate. However, after multiple cycles of the battery, the electrolyte solution is continuously consumed, and the electrolyte solution is likely to dissociate at the edge of the positive electrode plate, resulting in a lack of the electrolyte solution between the edge of the positive electrode plate and the negative electrode plate. As a result, ions at the edge of the positive electrode plate that cannot migrate to the negative electrode plate precipitate out as crystals.

### SUMMARY

The present disclosure aims to at least solve one of the technical problems in the related art. Therefore, an objective of the present disclosure is to provide a method for preparing a positive electrode plate. A positive electrode plate prepared by the method has the advantages of having a uniform thickness, being not prone to lithium precipitation, and providing a long service life.

The present disclosure further provides a positive electrode plate.

The present disclosure further provides a battery including the positive electrode plate.

To achieve the above objectives, an embodiment of a first aspect of the present disclosure provides a method for preparing a positive electrode plate, including: providing a current collector, the current collector including a coating region and a non-coating region; coating a positive-electrode active material on the coating region of the current collector; cutting the non-coating region at intervals along a length direction of the non-coating region to form a tab between every two adjacent cutting positions, an edge of a region of the positive-electrode active material corresponding to the cutting position being cut off at each cutting; and coating an electrically insulating adhesive on an edge of the positive-electrode active material between every two adjacent cutting positions,

A positive electrode plate prepared by the method according to the embodiment of the present disclosure has the advantages of having a uniform thickness, being not prone to lithium precipitation, and providing a long service life.

According to some embodiments of the present disclosure, the electrically insulating adhesive is further coated to the tab to cover a portion of the tab.

An embodiment of a second aspect of the present disclosure provides a positive electrode plate, including: a current collector, including a coating region and a non-coating region, at least one tab being constructed in the non-coating region, and portions of the coating region on two sides of the tab along a length direction of the coating region being each provided with a cutting recess; a positive-electrode active material, coated on the coating region, a thickness of a portion of the positive-electrode active material located between the adjacent cutting recesses being smaller than that of the other portions of the positive-electrode active material; and an electrically insulating adhesive, coated on the portion of the positive-electrode active material located between the adjacent cutting recesses.

The positive electrode plate according to the embodiment of the present disclosure has the advantages of having a uniform thickness, being not prone to lithium precipitation, and providing a long service life.

According to some embodiments of the present disclosure, the electrically insulating adhesive is further coated to the tab to cover a portion of the tab.

According to some embodiments of the present disclosure, a length by which the electrically insulating adhesive extends on the tab is not greater than 2 mm.

According to some embodiments of the present disclosure, a plurality of tabs are constructed, and the plurality of tabs are arranged at intervals along a length direction of the current collector and on at least one side of the current collector along a width direction.

According to some embodiments of the present disclosure, the electrically insulating adhesive is at least one of polyvinylidene fluoride, styrene butadiene rubber, styrene-isoprene-styrene, or polyacrylate.

An embodiment of a third aspect of the present disclosure provides a battery, including: a positive electrode plate according to the embodiment of the second aspect of the present disclosure; a negative electrode plate; and a separator, located between the negative electrode plate and the positive electrode plate.

By using the positive electrode plate according to the embodiment of the second aspect of the present disclosure, the battery according to the embodiment of the third aspect of the present disclosure has the advantages of being not prone to lithium precipitation and providing a long service life.

According to some embodiments of the present disclosure, the negative electrode plate includes a negative-electrode active material, a width of the negative-electrode active material is greater than a width of the positive-electrode active material, and an edge of the negative-electrode active material is adhered to the electrically insulating adhesive.

Additional aspects and advantages of the present disclosure will be partly given in and partly apparent from the description below, or understood through practice of the present disclosure.

### BRIEF DESCRIPTION OF THE DRAWINGS

FIG. 1 is a schematic diagram of a current collector coated with a positive-electrode active material according to the present disclosure;
FIG. 2 is a schematic diagram, from another viewing angle, of a current collector coated with a positive-electrode active material according to the present disclosure;
FIG. 3 is a schematic structural diagram of a positive electrode plate not coated with electrically insulating adhesive according to the present disclosure;
FIG. 4 is a schematic structural diagram of a positive electrode plate according to the present disclosure;
FIG. 5 is a schematic structural diagram, from another viewing angle, of a positive electrode plate according to the present disclosure; and
FIG. 6 is a schematic structural diagram of a battery according to the present disclosure.

### List of reference numerals:

positive electrode plate 1, negative electrode plate 2, battery 3, separator 4,
current collector 100, coating region 110, connecting segment 111, non-coating region 120, tab 130, cutting recess 140,
positive-electrode active material 200, electrically insulating adhesive 300, negative-electrode active material 400.

### DETAILED DESCRIPTION

The embodiments of the present disclosure are described in detail below, and the embodiments described with reference to accompanying drawings are exemplary.

In the description of the present disclosure, it should be understood that orientation or position relationships indicated by the terms such as "center", "longitudinal", "transverse", "length", "width", "thickness", "on", "below", "front", "rear", "left", "right", "vertical", "horizontal", "top", "bottom", "inner", "outer", "clockwise", "counterclockwise", "axial", "radial", and "circumferential" are based on orientation or position relationships shown in the accompanying drawings, and are used only for ease and brevity of illustration and description, rather than indicating or implying that the mentioned apparatus or component need to have a particular orientation or need to be constructed and operated in a particular orientation. Therefore, such terms should not be construed as limiting of the present disclosure.

In the description of the present disclosure, "multiple" and "a plurality of" mean two or more.

A method for preparing a positive electrode plate 1 according to an embodiment of the present disclosure will be described below with reference to the accompanying drawings.

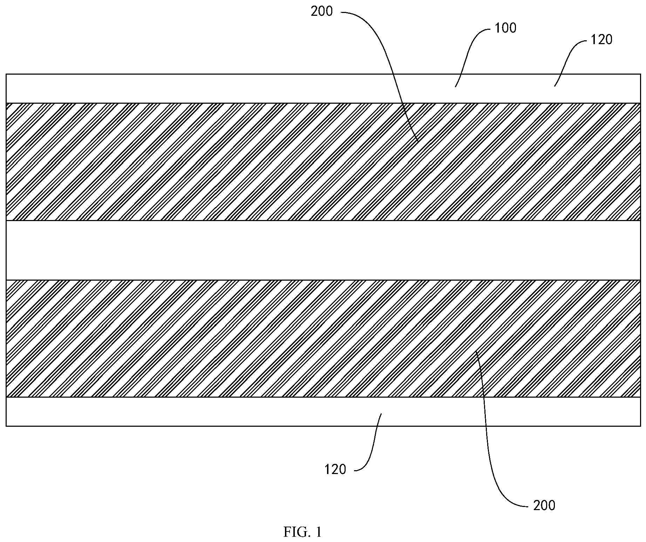

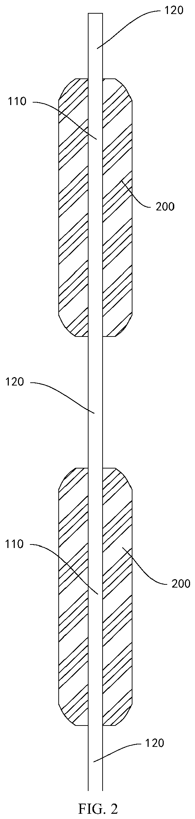

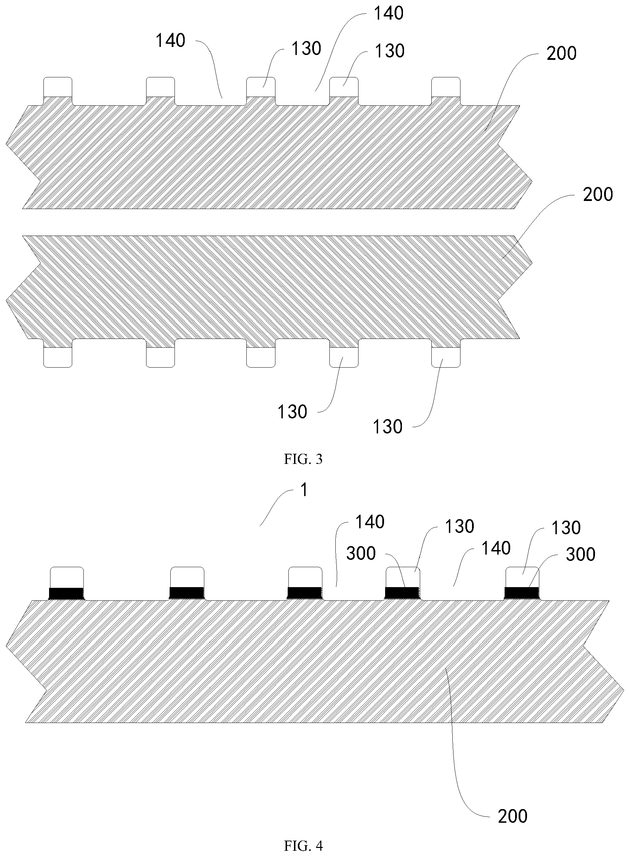

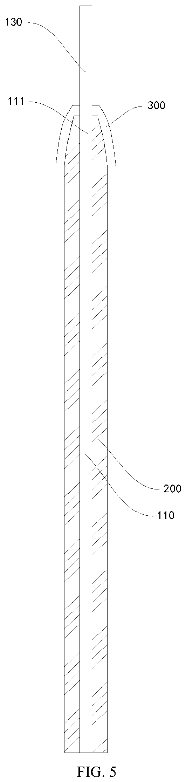

As shown in FIG. 1 to FIG. 5, the method for preparing a positive electrode plate 1 includes:
providing a current collector 100, the current collector 100 including a coating region 110 and a non-coating region 120;
coating a positive-electrode active material 200 on the coating region 110 of the current collector 100, as shown in FIG. 1 and FIG. 2;
cutting the non-coating region 120 at intervals along a length direction of the non-coating region 120 to form a tab 130 between every two adjacent cutting positions, an edge of a region of the positive-electrode active material 200 corresponding to the cutting position being cut off at each cutting, as shown in FIG. 3; and
coating an electrically insulating adhesive 300 on an edge of the positive-electrode active material 200 between every two adjacent cutting positions, as shown in FIG. 4 and FIG. 5.

According to the method for preparing a positive electrode plate 1 in the embodiment of the present disclosure, the non-coating region 120 is cut at intervals along the length direction of the non-coating region 120 to form the tab 130 between every two adjacent cutting positions, and the edge of the region of the positive-electrode active material 200 corresponding to the cutting position is cut off at each cutting.

It should be noted that the region of the positive-electrode active material 200 corresponding to the cutting position is a region located on one side of the positive-electrode active material 200 along a width direction and connected to the non-coating region 120. A portion of the coating region 110 connected to the tab 130 is a connecting segment 111. To be specific, the edge of the positive-electrode active material 200 is cut off except that the positive-electrode active material 200 coated on the connecting segment 111 is not cut off. The edge of the positive-electrode active material 200 is a region having a small thickness of the positive-electrode active material 200.

Based on the above, after the edge of the positive-electrode active material 200 corresponding to the cutting position is cut off, the thickness of the remaining portion of the positive-electrode active material 200 is the same except for the positive-electrode active material 200 applied to the connecting segment 111. This allows for better flatness of a battery 3 including the positive electrode plate 1, and ions are not likely to precipitate out as crystals after multiple cycles of the battery 3, thereby prolonging the service life of the positive electrode plate 1 and the battery 3.

For convenience of description, an example where ions contained in the positive-electrode active material 200 are lithium ions is described below. Of course, it can be understood that the positive-electrode active material 200 may also be a material containing other ions suitable for preparing the positive electrode plate 1.

In addition, the electrically insulating adhesive 300 is coated on the edge of the positive-electrode active material 200 between every two adjacent cutting positions. After the edge of the positive-electrode active material 200 corresponding to the cutting position is cut off, there is a high probability that lithium precipitation occurs at the positive-electrode active material 200 coated on the connecting segment 111. Therefore, the electrically insulating adhesive 300 is coated on a surface of the positive-electrode active material 200 coated on the connecting segment 111. The electrically insulating adhesive 300 can block the formation of an electrically conductive loop between the positive-electrode active material 200 coated on the connecting segment 111 and a negative electrode plate 2, to prevent deintercalation of lithium ions from the positive-electrode active material 200 coated on the connecting segment 111, thereby further avoiding lithium precipitation and further prolonging the service life of the positive electrode plate 1 and the battery 3.

In addition, because the electrically insulating adhesive 300 only needs to be coated on the positive-electrode active material 200 on the connecting segment 11, i.e., the electrically insulating adhesive 300 does not need to be coated on the entire edge of the positive-electrode active material 200, a smaller amount of the electrically insulating adhesive 300 is used, so that the costs can be reduced.

Therefore, a positive electrode plate 1 prepared by the method for preparing a positive electrode plate 1 according to the embodiments of the present disclosure has the advantages of having a uniform thickness, being not prone to lithium precipitation, and providing a long service life.

According to some embodiments of the present disclosure, as shown in FIG. 4 and FIG. 5, the electrically insulating adhesive 300 is further coated to the tab 130 to cover a portion of the tab 130. In this way, the electrically insulating adhesive 300 can completely cover a side of the positive-electrode active material 200 coated on the connecting segment 111 facing the tab 130, so that the positive-electrode active material 200 coated on the connecting segment 111 is less prone to lithium precipitation, thereby prolonging the service life of the positive electrode plate 1 and the battery 3.

A positive electrode plate 1 according to an embodiment of the present disclosure will be described below with reference to the accompanying drawings. As shown in FIG. 4 and FIG. 5, the positive electrode plate 1 includes a current collector 100, a positive-electrode active material 200, and an electrically insulating adhesive 300.

The current collector 100 includes a coating region 110 and a non-coating region 120. At least one tab 130 is constructed in the non-coating region 120. Portions of the coating region 110 on two sides of the tab 130 along a length direction of the coating region 110 are each provided with a cutting recess 140. The positive-electrode active material 200 is coated on the coating region 110. A thickness of a portion of the positive-electrode active material 200 located between the adjacent cutting recesses 140 is smaller than that of the other portions of the positive-electrode active material 200. The electrically insulating adhesive 300 is coated on the portion of the positive-electrode active material 200 located between the adjacent cutting recesses 140.

Therefore, except for the portion of the positive-electrode active material 200 located between the adjacent cutting recesses 140, the positive-electrode active material 200 of the positive electrode plate 1 according to the embodiment of the present disclosure has a uniform thickness and has the advantages of being not prone to lithium precipitation and providing a long service life.

According to some embodiments of the present disclosure, as shown in FIG. 4 and FIG. 5, the electrically insulating adhesive 300 is further coated to the tab 130 to cover a portion of the tab 130. In this way, the electrically insulating adhesive 300 can completely cover a side of the portion of the positive-electrode active material 200 between the adjacent cutting recesses 140 facing the tab 130, so that the portion of the positive-electrode active material 200 located between the adjacent cutting recesses 140 is less prone to lithium precipitation, thereby prolonging the service life of the positive electrode plate 1 and the battery 3.

According to some embodiments of the present disclosure, a length of the electrically insulating adhesive 300 extending on the tab 130 is not greater than 2 mm, where a length of the tab 130 is greater than 2 mm. This can ensure that the electrically insulating adhesive 300 completely covers the portion of the positive-electrode active material 200 located between the adjacent cutting recesses 140, and can prevent the electrically insulating adhesive 300 from covering an excessive area on the tab 130 and affecting the electrical conduction between the tab 130 and an external object, thereby ensuring that the positive electrode plate 1 can be normally used.

According to some embodiments of the present disclosure, as shown in FIG. 4, a plurality of tabs 130 are constructed, and the plurality of tabs 130 are arranged at intervals along a length direction of the current collector 100 and on at least one side of the current collector 100 along a width direction. In this way, the length of the positive electrode plate 1 can be designed to be longer to improve the energy density of the battery 3 including the positive electrode plate 1 and reduce the internal resistance of the battery 3 to prolong the service life of the battery 3.

According to some embodiments of the present disclosure, the electrically insulating adhesive 300 is at least one of polyvinylidene fluoride, styrene butadiene rubber, styrene-isoprene-styrene, or polyacrylate. In this way, the electrically insulating adhesive 300 is made of a high molecular polymer resistant to the electrolyte solution, to facilitate the insulation of the portion of the positive-electrode active material 200 located between the adjacent cutting recesses 140, so as to effectively avoid lithium precipitation in the battery 3 including the positive electrode plate 1.

According to some embodiments of the present disclosure, the positive-electrode active material 200 includes a lithium element, and the battery 3 including the positive electrode plate 1 is a lithium-ion battery. In this way, the positive electrode plate 1 is convenient to store and move, and is conducive to environmental protection.

A battery 3 according to an embodiment of the present disclosure will be described below with reference to the accompanying drawings.

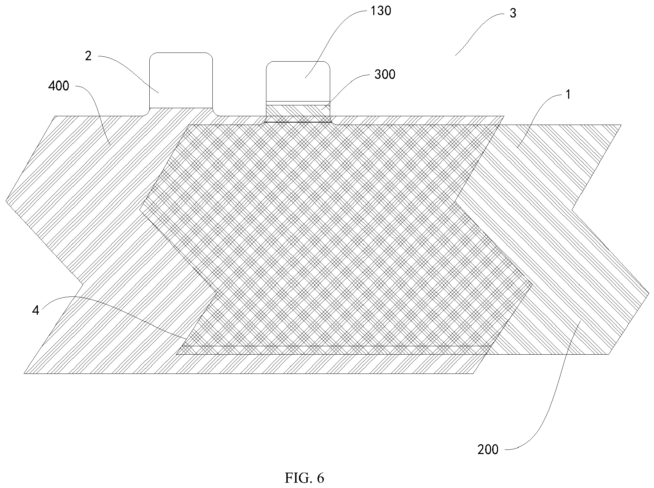

As shown in FIG. 6, the battery 3 includes a negative electrode plate 2, a separator 4, and a positive electrode plate 1 according to the above embodiment of the present disclosure. The separator 4 is located between the negative electrode plate 2 and the positive electrode plate 1. The separator 4 can allow ions to pass through and keeps electrons from passing through, so as to prevent spontaneous power generation between the negative electrode plate 2 and the positive electrode plate 1, thereby improving the reliability of the battery 3.

By using the positive electrode plate 1 according to the above embodiment of the present disclosure, the battery 3 according to the embodiment of the present disclosure has the advantages of being not prone to lithium precipitation and providing a long service life.

According to some embodiments of the present disclosure, as shown in FIG. 6, the negative electrode plate 2 includes a negative-electrode active material 400, a width of the negative-electrode active material 400 is greater than a width of the positive-electrode active material 200, and an edge of the negative-electrode active material 400 extends to the electrically insulating adhesive 300. Thereby, the energy density of the battery pack 3 can be improved. The edge of the negative-electrode active material 400 may be located between two ends of the electrically insulating adhesive 300.

Because the electrically insulating adhesive 300 is coated on only the portion of the positive-electrode active material 200 located between the adjacent cutting recesses 140, i.e., the electrically insulating adhesive 300 is not coated on the other portions of the positive-electrode active material 200 on the positive electrode plate 1, the other portions of the positive-electrode active material 200 on the positive electrode plate 1 can be electrically conducted with the negative electrode plate 2, thereby achieving a higher energy density of the battery 3.

Other configurations and operations of the method for preparing a positive electrode plate 1, a positive electrode plate 1, and a battery including same according to the embodiments of the present disclosure are known to those of ordinary skill in the art, and are not described in detail herein again.

In the description of the specification, the description with reference to the terms "an embodiment", "some embodiments", "exemplary embodiments", "example", "specific example", or "some example" and so on means that specific features, structures, materials or characteristics described in connection with the embodiment or example are embraced in at least one embodiment or example of the present disclosure. In this specification, exemplary descriptions of the foregoing terms do not necessarily refer to the same embodiment or example.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A method for preparing a positive electrode plate, comprising:
providing a current collector, the current collector comprising a coating region and a non-coating region;
coating a positive-electrode active material on the coating region of the current collector;
cutting the non-coating region at intervals along a length direction of the non-coating region to form a tab between every two adjacent cutting positions, an edge of a region of the positive-electrode active material corresponding to the cutting position being cut off at each cutting; and
coating an electrically insulating adhesive on an edge of the positive-electrode active material between every two adjacent cutting positions.

2. The method for preparing the positive electrode plate according to claim 1, wherein, further coating the electrically insulating adhesive to the tab to cover a portion of the tab.

3. A positive electrode plate, comprising:
a current collector, comprising a coating region and a non-coating region, at least one tab being constructed in the non-coating region, and portions of the coating region on two sides of the tab along a length direction of the coating region being each provided with a cutting recess;
a positive-electrode active material, coated on the coating region, a thickness of a portion of the positive-electrode active material located between the adjacent cutting recesses being smaller than that of the other portions of the positive-electrode active material; and
an electrically insulating adhesive, coated on the portion of the positive-electrode active material located between the adjacent cutting recesses.

4. The positive electrode plate according to claim 3, wherein the electrically insulating adhesive is further coated to the tab to cover a portion of the tab.

5. The positive electrode plate according to claim 4, wherein a length of the electrically insulating adhesive extending on the tab is not greater than 2 mm.

6. The positive electrode plate according to any one of claims 3 to 5, wherein a plurality of tabs are constructed, and the plurality of tabs are arranged at intervals along a length direction of the current collector and on at least one side of the current collector along a width direction.

7. The positive electrode plate according to any one of claims 3 to 6, wherein the electrically insulating adhesive is at least one of polyvinylidene fluoride, styrene butadiene rubber, styrene-isoprene-styrene, or polyacrylate.

8. A battery, comprising:
a positive electrode plate according to any one of claims 3 to 7;
a negative electrode plate; and
a separator, located between the negative electrode plate and the positive electrode plate.

9. The battery according to claim 8, wherein the negative electrode plate comprises a negative-electrode active material, a width of the negative-electrode active material is greater than a width of the positive-electrode active material, and an edge of the negative-electrode active material extends to the electrically insulating adhesive.
